# EUROPÄISCHE PATENTANMELDUNG

(11) **EP 3 315 279 A1**
(43) Veröffentlichungstag der Anmeldung: **02.05.2018**
(21) Anmeldenummer: 17198698.7
(22) Anmeldetag: 26.10.2017
(51) Int. Cl.: B29C 43/22, B29C 43/46, B29C 33/44, B29L 31/00, A44B 18/00, B29C 33/38, B29C 33/10

(54) **VERFAHREN ZUR HERSTELLUNG EINES HAFTVERSCHLUSSTEILS**

(30) Priorität: 26.10.2016 DE 102016120410
(71) Anmelder: Lohmann-koester GmbH & Co. KG, 96146 Altendorf (DE)
(72) Erfinder:
(74) Vertreter: Molnia, David

(57) **Zusammenfassung**

Die vorliegende Erfindung betrifft ein Verfahren zur Herstellung eines Haftverschlussteils, welches einen Träger, sich senkrecht vom Träger erstreckende Stiele, und Verhakungsmittel an den dem Träger gegenüberliegenden Bereichen der Stiele, umfasst, die Schritte umfassend: Extrudieren eines thermoplastischen Kunststoffs in einen Spalt zwischen einer Druckwalze und einem Formhohlkörper, Pressen eines Teils des Kunststoffs in Formhohlräume des Formhohlkörpers mittels der Druckwalze, teilweises Verfestigen des thermoplastischen Kunststoffs in den Formhohlräumen, Lösen der Stiele gemeinsam mit den Verhakungsmitteln aus den Formhohlräumen, wobei der Formhohlkörper vollständig aus gesintertem Material gebildet ist, und wobei der Formhohlkörper am Grund der Formhohlräume jeweils mindestens einen Vorsprung, der sich in Bezug auf den jeweiligen Formhohlraum in axiale Richtung erstreckt und mindestens eine Hinterschneidung aufweist. Darüber hinaus betrifft die vorliegende Erfindung ein Verfahren zur Herstellung eines Formhohlkörpers zur Verwendung in dem vorstehend beschriebenen Verfahren.

## Beschreibung

### Technisches Gebiet

Die vorliegende Erfindung betrifft ein Verfahren zur Herstellung eines Haftverschlussteils, welches einen Träger, sich senkrecht vom Träger erstreckende Stiele, und Verhakungsmittel an den dem Träger gegenüberliegenden Bereichen der Stiele umfasst, sowie ein Verfahren zur Herstellung eines Formhohlkörpers.

### Stand der Technik

Zur Herstellung von Haken für mechanische Verschlüsse, wie zum Beispiel Klett- oder Haken-Schlaufenverschlüsse, werden Vorformlinge in Form von auf einem Träger angeordneten Stielen hergestellt. Diese Vorformlinge werden in der Regel mittels einer Formwalze und einer Anpresswalze erzeugt. Dabei kann die Formwalze eine Gießwalze umfassen, auf welcher ein Sieb zum Formen der Stiele angeordnet ist. Zur Herstellung der Stiele wird dann ein thermoplastisches Material in einen Spalt zwischen der Formwalze und der Anpresswalze extrudiert. Die Schmelze erkaltet teilweise in den Formholräumen der Formwalze, welche durch das Sieb gebildet werden. Nach dem Entformen liegen Vorformlinge in Form von Stielen vor, welche von einer Matte beziehungsweise einem Träger emporragen.

Die Form der Vorformlinge ist entscheidend für die Funktion sowie die nötige Nachbearbeitung. Die Stielenden werden durch einen Nachbearbeitungsschritt umgeformt, so dass sie eine Erstreckung senkrecht zur Längsrichtung der Stiele aufweisen. Diese überstehenden Stielenden eignen sich dazu von Schlaufen erfasst zu werden und sich in diesen zu verhaken. Entsprechend liegen nach dem Nachbearbeitungsschritt die Stiele in Form von Haken vor.

Auf die endgültige Form der Haken kann bereits bei der Herstellung der Vorformlinge Einfluss genommen werden. Indem man bereits den Vorformlingen eine spezifische Geometrie verleiht, kann der Nachbearbeitungsaufwand zum Erzeugen der fertigen Haken erheblich reduziert werden.

Beispielsweise ist aus der DE 198 28 856 C1 bekannt, Formholräume mit Hinterschneidungen zu verwenden, um Stiele mit endseitigen Verdickungen zu bilden. Dabei ist jedoch darauf zu achten, dass der Querschnittunterschied so gewählt ist, dass das Ausziehen der Stiele nach Erhärten oder teilweisem Erhärten des Kunststoffs ohne Schwierigkeiten erfolgen kann.

Darüber hinaus zeigt die DE 198 28 856 C1 eine alternative Ausführungsform, bei welcher anstelle von endseitigen Verdickungen Vertiefungen in den gebildeten Stielen erzeugt werden. Dabei erstrecken sich Vorsprünge in die Hohlräume des Siebes.

Ein Nachteil der vorstehend beschriebenen Formgebungsverfahren liegt darin, dass zur Erzeugung der endseitigen Verdickungen oder Vertiefungen zusätzlich zu dem Sieb jeweils ein zweites formgebendes Element nötig ist. Auch lassen sich diese Elemente nicht kombinieren, so dass entweder endseitige Verdickungen oder Vertiefungen erzeugt werden können.

### Darstellung der Erfindung

Ausgehend von dem bekannten Stand der Technik ist es eine Aufgabe der vorliegenden Erfindung, ein Verfahren zur Herstellung eines Haftverschlussteils anzugeben, welches die Entformung der Stiele verbessert und gleichzeitig mehr Gestaltungsspielraum in Bezug auf die Formgebung der Haftverschlussteile zulässt.

Diese Aufgabe wird mittels eines Verfahrens mit den Merkmalen des Anspruchs 1 gelöst, Vorteilhafte Ausgestaltungen ergeben sich aus den Unteransprüchen.

Entsprechend wird ein Verfahren zur Herstellung eines Haftverschlussteils angegeben, welches einen Träger, sich senkrecht vom Träger erstreckende Stiele, und Verhakungsmittel an den dem Träger gegenüberliegenden Bereichen der Stiele umfasst, die Schritte umfassend: Extrudieren eines thermoplastischen Kunststoffs in einen Spalt zwischen einer Druckwalze und einem Formhohlkörper, Pressen eines Teils des Kunststoffs in Formhohlräume des Formhohlkörpers mittels der Druckwalze, teilweise Verfestigen des thermoplastischen Kunststoffs in den Formhohlräumen, Lösen der Stiele gemeinsam mit den Verhakungsmitteln aus den Formhohlräumen, wobei der Formhohlkörper vollständig aus gesintertem Material gebildet ist. Erfindungsgemäß weist der Formhohlkörper am Grund der Formhohlräume jeweils mindestens einen Vorsprung, der sich in Bezug auf den jeweiligen Formhohlraum in axialer Richtung erstreckt, und mindestens eine Hinterschneidung auf.

Durch die Bereitstellung von sowohl einer Hinterschneidung als auch eines Vorsprungs am Grund der Formhohlräume, kann die Entformung bzw. das Lösen der Stiele aus den Formhohlräumen begünstigt werden. Die Hinterschneidungen am Grund der Formhohlräume ermöglichen die Erzeugung von Verhakungsmitteln am Ende der Stiele. Werden die Stiele nun gemeinsam mit den Verhakungsmitteln aus den Formhohlräumen gelöst, wird der thermoplastische Kunststoff, welcher sich zunächst im Bereich der Hinterschneidungen befindet, in Bezug auf die Längsrichtung der Formhohlräume nach innen gedrückt. Ist der thermoplastische Kunststoff bereits teilweise verfestigt, lässt sich der thermoplastische Kunststoff nur schwer aus dem Bereich der Hinterschneidungen lösen. Darüber hinaus kann es auch zu einem Abreißen der Stiele kommen, wobei ein Teil des thermoplastischen Materials im Bereich der Hinterschneidungen in den Formhohlräumen verbleibt.

Die zusätzliche Anordnung eines Vorsprungs am Grund der Formhohlräume wirkt diesem Problem entgegen. Der Vorsprung führt dazu, dass die Stiele an ihren Enden, d.h. im Bereich der Verhakungsmittel, eine Ausnehmung aufweisen. Werden nun die Stiele aus den Formhohlräumen gelöst, stellt die mittels des Vorsprungs erzeugte Ausnehmung am Ende der Stiele einen Raum bereit, in welchen die Abschnitte der Verhakungsmittel, welche zunächst im Bereich der Hinterschneidungen der Formhohlräume angeordnet waren, ausweichen können. Entsprechend begünstigt die mittels des Vorsprungs am Grund des Formhohlraums erzeugte Ausnehmung die radiale Kompression des thermoplastischen Kunststoffs beim Verlassen des Bereichs der Hinterschneidung.

Nachdem die Stiele gemeinsam mit dem Verhakungsmittel aus den Formhohlräumen gelöst worden sind, können die Verhakungsmittel beispielsweise durch eine Kalanderwalze in radialer Richtung abgeflacht werden, wobei die mittels des Vorsprungs am Grund des Formhohlraums erzeugte Ausnehmung das Abflachen der Verhakungsmittel begünstigt.

Die vorstehend beschriebene verbesserte Entformbarkeit der Stiele samt Verhakungsmittel aus den Formhohlräumen erhöht den Gestaltungsspielraum in Bezug auf die Form der Hinterschneidungen.

In einer bevorzugten Ausgestaltung weist der Formhohlkörper am Grund der Formhohlräume jeweils mindestens ein Entlüftungsloch auf. Die Entlüftungslöcher unterstützen die Vorgänge des Befüllens der Formhohlräume mit dem thermoplastischen Kunststoff sowie des Entformens der Stiele mit den Verhakungsmitteln aus den Formhohlräumen. Beim Befüllen eines Formhohlraums mit thermoplastischem Kunststoff drängt die Fließfront des thermoplastischen Kunststoffs die in dem Formhohlraum vorhandene Luft durch das Entlüftungsloch aus dem Formhohlraum heraus. Dadurch kann beispielsweise der Einschluss von Blasen in dem thermoplastischen Kunststoff unterbunden werden. Beim Lösen der Stiele mit den Verhakungsmitteln aus den Formhohlräumen sorgen die Entlüftungslöcher dafür, dass Luft in die Formhohlräume nachströmen kann. Dadurch kann die Entstehung eines Unterdrucks in den Formhohlräumen unterbunden und somit das Entformen der Stiele gemeinsam mit den Verhakungsmitteln begünstigt werden.

In einer weiter bevorzugten ausführungsform ist der Formhohlkörper am Grund der Formhohlräume porös ausgestaltet. Poren im Formhohlkörper im Bereich zwischen dem Formhohlraum und der inneren Umfangsoberfläche des Formhohlkörpers haben die gleiche Funktion wie die vorstehend beschriebenen Entlüftungslöcher. Entsprechend kann dadurch die Entstehung eines Unterdrucks in den Formhohlräumen unterbunden und somit das Entformen der Stiele gemeinsam mit den Verhakungsmitteln begünstigt werden.

In einer bevorzugten Ausführungsform ist der Vorsprung jeweils mittig am Grund der Formhohlräume angeordnet. Dadurch ist es möglich, Stiele mit symmetrischen Verhakungsmitteln zu erzeugen. Beim Lösen der Stiele aus den Formhohlräumen können die frisch erzeugten Verhakungsmittel aus dem Bereich der Hinterschneidungen gleichmäßig in Bezug auf die Längsrichtung der Formhohlräume nach innen klappen. Darüber hinaus begünstigt die Ausnehmung in den Verhakungsmitteln, welche auf die mittige Anordnung der Vorsprünge am Grund der Formhohlräume zurückzuführen ist, dass sich die Verhakungsmittel auch bei einem nachfolgenden Kalandern im Wesentlichen gleichmäßig bzw. symmetrisch verformen.

In einer Weiterbildung sind am Grund der Formhohlräume jeweils mindestens zwei Vorsprünge angeordnet. Dadurch lässt sich allgemein, wie vorstehend beschrieben, das Lösen der Stiele gemeinsam mit den Verhakungsmitteln aus den Formhohlräumen weiter verbessern. Darüber hinaus ist es möglich, beispielsweise mindestens zwei lokale Hinterschneidungen vorzusehen, welche derart gegenüber den mindestens zwei Vorsprüngen angeordnet sind, dass beim Lösen der Verhakungsmittel aus den Formhohlräumen der zumindest teilweise verfestigte thermoplastische Kunststoff, welcher zunächst die mindestens zwei lokalen Hinterschneidungen ausfüllt, in die durch die mindestens zwei Vorsprünge erzeugten mindestens zwei Ausnehmungen gedrückt werden kann. Dabei ist jeweils ein Vorsprung einer lokalen Hinterschneidung zugeordnet.

In einer weiter bevorzugten Ausführungsform weist der Vorsprung in Bezug auf die Ebene des Grundes der Formhohlräume eine längliche Form auf. Durch die längliche Form des Vorsprungs kann in dem Verhakungsmittel eine Hauptklapprichtung definiert werden, in welche das Verhakungsmittel beim Lösen aus den Formhohlräumen zusammenklappen kann. Die Hauptklapprichtung verläuft dabei im Wesentlichen senkrecht zur Längsseite des Vorsprungs. Der Begriff "klappen" meint hier das aufeinander zu Bewegen der Abschnitte des zumindest teilweise verfestigten thermoplastischen Kunststoffs, welche zunächst in den Hinterschneidungen der Formhohlräume angeordnet sind.

In einer bevorzugten Ausführungsform verlaufen die länglichen Vorsprünge parallel zueinander oder kreuzen sich. Durch zwei parallel zueinander verlaufende längliche Vorsprünge kann das vorstehend beschriebene Zusammenklappen der Verhakungsmittel beim Lösen aus den Formhohlräumen weiter begünstigt werden.

Durch längliche, sich kreuzende Vorsprünge können die Verhakungsmittel im Bereich des Grundes der Formhohlräume in mindestens vier Segmente unterteilt werden. Beim Lösen der Verhakungsmittel aus den Formhohlräumen können sich diese vier Segmente vergleichbar mit einer sich schließenden Blume aufeinander zu bewegen.

In einer weiter bevorzugten Ausgestaltung weist der Vorsprung die Form eines Kegels, einer Halbkugel oder eine Pyramide auf. Kegel-, halbkugel- und pyramidenförmige Vorsprünge können komplementäre Ausnehmungen in den Verhakungsmitteln erzeugen, welche ein Entformen der Stiele samt den Verhakungsmitteln bei umlaufenden Hinterschneidungen begünstigen.

In einer weiter bevorzugten Ausführungsform erstrecken sich die Hinterschneidungen nur in einer Richtung im Wesentlichen senkrecht zur Längsrichtung der Formhohlräume. Derartig angeordnete Hinterschneidungen eignen sich insbesondere für schmale Verhakungsmittel. Die Formhohlräume können beispielsweise nahezu T-förmig ausgebildet sein, wobei sich die Hinterschneidungen in Form von zwei Armen senkrecht von der Längsrichtung der Formhohlräume erstrecken. Beim Entformen der Kunststoffstiele gemeinsam mit den Verhakungsmitteln können die Arme begünstigt durch die mittels des Vorsprungs erzeugte Aussparung in eine Richtung im Wesentlichen parallel der Längsrichtung der Formhohlräume geklappt werden. Nach der Entformung aus dem Formhohlkörper sind die Verhakungsmittel in Form von Armen nahezu parallel zu den Stielen ausgerichtet. Mittels eines Kalanders können die Verhakungsmittel dann wieder in eine Position gebracht werden, in welcher sie sich nahezu senkrecht von der Längsrichtung der Stiele erstrecken.

In einer bevorzugten Ausgestaltung erstrecken sich die Hinterschneidungen in mindestens zwei Richtungen im Wesentlichen senkrecht zur Längsrichtung der Formhohlräume. Dadurch ist es möglich, beispielsweise sternförmige Verhakungsmittel zu erzeugen, welche sich trotz einer vergleichsweise komplexen Hinterschneidungsgeometrie Dank des mindestens einen Vorsprungs am Grund der Formhohlräume leicht entformen lassen.

In einer weiter bevorzugten Ausführungsform erstrecken sich die Hinterschneidungen umlaufend im Wesentlichen senkrecht zur Längsrichtung. Dadurch ist es möglich, beispielsweise pilzförmige Verhakungsmittel zu erzeugen, welche sich trotz einer vergleichsweise komplexen Hinterschneidungsgeometrie Dank des mindestens einen Vorsprungs am Grund der Formhohlräume leicht entformen lassen.

In einer weiteren Ausführungsform ist der Formhohlkörper auf einer Trägerwalze angebracht.

Die oben genannte Aufgabe wird auch durch ein Verfahren mit den Merkmalen des Anspruchs 12 gelöst. Entsprechend wird ein Verfahren zur Herstellung eines Formhohlkörpers zur Verwendung in einem Verfahren gemäß den vorstehend beschriebenen Aspekten bereitgestellt, wobei der Formhohlkörper vollständig durch Sintern erzeugt wird. Erfindungsgemäß werden in einem Formhohlkörper Formhohlräume erzeugt, die jeweils einen Grund aufweisen, an welchem ein Materialvorsprung angeordnet ist, welcher sich in axialer Richtung der Formhohlräume erstreckt und wobei im Bereich des Grundes mindestens eine Hinterschneidung, welche sich im Wesentlichen senkrecht zur Längsrichtung eines Formhohlraums erstreckt, angeordnet ist.

Ein derartiger Formhohlkörper reduziert die Fehleranfälligkeit des Verfahrens. Insbesondere ist es nicht erforderlich mehrere formgebende Elemente zusammenzuführen und aufeinander abzustimmen. Dadurch können weitere Arbeitsschritte eingespart werden. Darüber hinaus weist ein derartiger Formhohlkörper ein vergleichsweise größeres Einsatzspektrum auf. So können auch sehr feine Vorformlinge, deren Durchmesser im µm Bereich liegen, erzeugt werden, für welche eine Bearbeitung mittels mehreren kombinierten Formgebenden Elementen technisch derzeit nicht umsetzbar ist.

Dadurch dass in den Formhohlräumen Hinterschneidungen und Vorsprünge kombiniert werden können, lassen sich Vorformlinge mit vergleichsweise komplexen endseitigen Geometrien erzeugen. Durch die Bereitstellung von sowohl einer Hinterschneidung als auch eines Vorsprungs am Grund der Formhohlräume, kann die Entformung bzw. das Lösen der Stiele aus den Formhohlräumen begünstigt werden. Die Hinterschneidungen am Grund der Formhohlräume ermöglichen die Erzeugung von Verhakungsmitteln am Ende der Stiele. Werden die Stiele nun gemeinsam mit den Verhakungsmitteln aus den Formhohlräumen gelöst, wird der zumindest teilweise verfestigte thermoplastische Kunststoff, welcher sich zunächst im Bereich der Hinterschneidungen befindet, in Bezug auf die Längsrichtung der Formhohlräume nach innen gedrückt.

Der zusätzliche Vorsprung führt dazu, dass die Stiele an ihren Enden, d.h. im Bereich der Verhakungsmittel, eine Ausnehmung aufweisen. Werden nun die Stiele aus den Formhohlräumen gelöst, stellt die mittels des Vorsprungs erzeugte Ausnehmung am Ende der Stiele einen Raum bereit, in welchen die Abschnitte der Verhakungsmittel, welche zunächst im Bereich der Hinterschneidungen der Formhohlräume angeordnet waren, ausweichen können.

In einer Weiterbildung umfasst das Sintermaterial Metallpulver. Dadurch können Formhohlkörper aus Metallen wie zum Beispiel Eisen, Aluminium, Magnesium, Kupfer, Zink und der Gleichen hergestellt werden.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: schematisch eine Vorrichtung zur Durchführung eines Verfahrens zur Herstellung eines Haftverschlussteils,
- Figuren 2a bis 2c: schematisch das Entformen eines Verhakungsmittels aus einem Formhohlraum,
- Figur 3: schematisch einen Formhohlraum mit einer umlaufenden Hinterschneidung,
- Figur 4a: schematisch ein mittels des in Figur 3 gezeigten Formhohlraums erzeugtes Verhakungsmittel, und
- Figur 4b: schematisch das Verhakungsmittel aus Figur 4a in abgekappter Form.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleich wirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

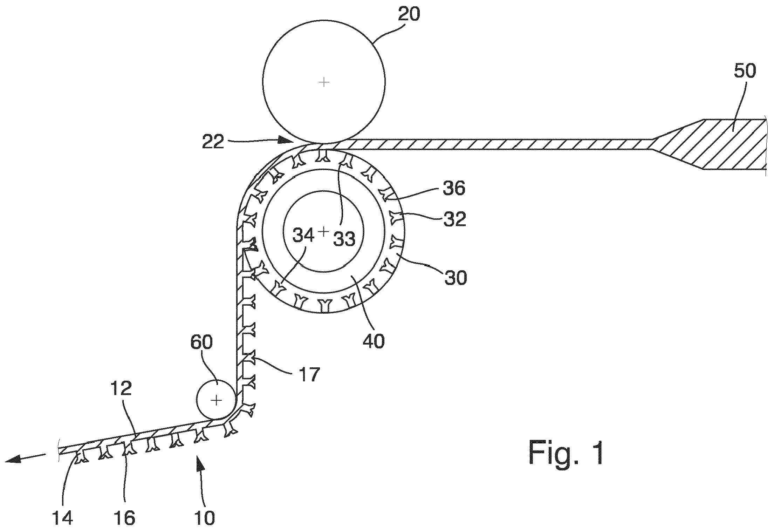

Figur 1 ist eine Vorrichtung zur Durchführung des Verfahrens zur Herstellung eines Haftverschlussteils zu entnehmen. Eine Düse 50 extrudiert einen thermoplastischen Kunststoff in einen Spalt 22 zwischen einer Druckwalze 20 und einem Formhohlkörper 30. Der Formhohlkörper 30 weist eine Vielzahl an Formhohlräumen 32 auf, welche sich von der Umfangsoberfläche des Formhohlkörpers 30 radial nach innen erstrecken. Ein Teil des auf den Formhohlkörper 30 extrudierten thermoplastischen Kunststoffs wird mittels der Druckwalze 20 in die Vielzahl der Formhohlräume 32 gedrückt. Die Druckwalze 20 und der Formhohlkörper 30 rotieren in entgegengesetzte Drehrichtung, so dass der extrudierte thermoplastische Kunststoff weiter von der Düse 50 weg transportiert wird.

Der Formhohlkörper 30 ist ein gesinterter Körper. Die Formhohlräume 32 weisen Hinterschneidungen auf, welche im Sinterverfahren erzeugt worden sind. Die Hinterschneidungen verleihen den mittels den Formhohlräumen 32 erzeugten Verhakungsmitteln 16 eine geeignete Hakenform.

Vom Grund 33 der Formhohlräume 32 erstreckt sich ein Vorsprung 34 in Längsrichtung der Formhohlräume 32. Wird der thermoplastische Kunststoff durch die Druckwalze 20 in einen Formhohlraum 32 gedrückt, so weist das dadurch entstehende Verhakungsmittel 16 an der Stelle des Vorsprungs 34 eine Aussparung 17 auf.

Die Formhohlräume 32 weisen jeweils einen länglichen Abschnitt zur Bildung eines Stiels 14 sowie die Hinterschneidungen zur Bildung der Verhakungsmittel 16 auf. Der Stiel 14 und das Verhakungsmittel 16 bilden zusammen ein Haftverschlussteil 10. Ein Teil des thermoplastischen Kunststoffs verbleibt auf der Umfangsoberfläche des Formhohlkörpers 30 und bildet einen Träger 12, welcher die mittels den Formhohlräumen 32 erzeugten Haftverschlussteile 10 verbindet.

Der thermoplastische Kunststoff verbleibt in etwa für eine Viertel Drehung des Formhohlkörpers 30 in einem Formhohlraum 32. Innerhalb dieser Vierteldrehung erfährt der thermoplastische Kunststoff eine erste Verfestigung. Mittels einer Umlenkrolle 60 wird der Träger 12 von der Umfangsoberfläche des Formhohlkörpers 30 abgelenkt, wodurch es zu einem Entformen der Haftverschlussteile 10 aus den Formhohlräumen 32 kommt.

Die auf den Vorsprung 34 der Formhohlräume 32 zurückzuführende Aussparung 17 in den Verhakungsmitteln 16 begünstigt das Entformen der Haftverschlussteile 10. Insbesondere der Bereich der Verhakungsmittel 16, welcher durch die Hinterschneidungen 36 geformt worden ist, kann dadurch leichter entformt werden. Der Teil der Verhakungsmittel 16, welcher sich zunächst im Bereich der Hinterschneidungen 36 befindet, kann beim Entformen in die Aussparung 17 ausweichen. Durch den Vorsprung 34 am Grund 33 der Formhohlräume 32 sind vergleichsweise komplexe Hinterschneidungen 36 möglich.

Um das Befüllen der Formhohlräume 32 mit thermoplastischem Kunststoff zu begünstigen, und beispielsweise eine Blasenbildung zu vermeiden, weisen die Formhohlräume 32 an ihrem Grund 33 Entlüftungslöcher 38 auf. Die Entlüftungslöcher 38 begünstigen auch das Entformen der Haftverschlussteile 10 aus den Formhohlräumen 32. So kann durch die Entlüftungslöcher 38 die Bildung eines Unterdrucks in den Formhohlräumen aufgrund des Herausziehens des Haftverschlussteils 10 vermieden werden.

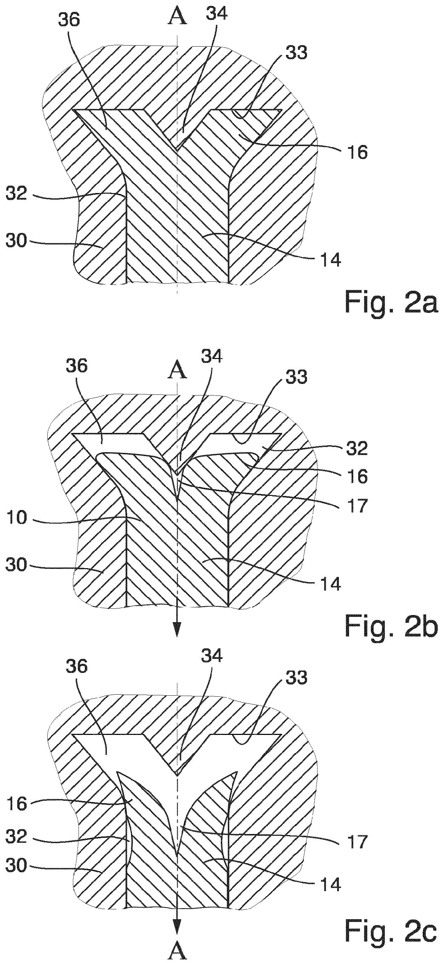

Figuren 2a bis 2c zeigen Detailansichten eines Formhohlraums 32 in dem Formhohlkörper 30. Figur 2a zeigt einen Zustand, in welchem der Formhohlraum 32 vollständig mit thermoplastischem Material gefüllt ist. Das thermoplastische Material ist bereits teilweise ausgehärtet und bildet im Bereich der Hinterschneidungen 36 die Verhakungsmittel 16 und daran anschließend den Stiel 14.

Am Grund 33 des Formhohlraums 32 ist mittig ein pyramidenförmiger Vorsprung 34 angeordnet. Alternativ kann der Vorsprung auch die Form eines Kegels, einer Halbkugel und dergleichen aufweisen.

Figur 2b zeigt den Formhohlraum 32 aus Figur 2a mit dem Unterschied, dass das Haftverschlussteil 10 bereits geringfügig aus dem Formhohlraum 32 herausgezogen worden ist. Die Verhakungsmittel 16 haben sich bereits vom Grund 33 des Formhohlraums 32 entfernt. Der Vorsprung 34 führt dazu, dass beim Herausziehen des Verhakungsmittels 10 eine mittige Aussparung 17 im Bereich der Verhakungsmittel zurückbleibt. Der Teil der Verhakungsmittel, welcher ursprünglich im Bereich der Hinterschneidungen 36 angeordnet war, kann nun in den Bereich der Aussparung 17 ausweichen. Beim Herausziehen des Haftverschlussteils 10 werden die Verhakungsmittel 16 beim Verlassen der Bereiche der Hinterschneidungen 36 in die Aussparung 17 gedrückt.

In dem in Figur 2c gezeigten Zustand ist das Haftverschlussteil 10 bereits derart weit aus dem Formhohlraum 32 gezogen, dass die Verhakungsmittel 16 im Begriff sind, den Bereich der Hinterschneidung 36 vollständig zu verlassen. Um den Verhakungsmitteln 16, welche zuvor im Bereich der Hinterschneidungen 36 angeordnet waren, Platz zu machen, ist die Aussparung 17 auf einen dünnen Spalt geschrumpft. Die Aussparung 17 verleiht dem Haftverschlussteil 10 und insbesondere dem Bereich der Verhakungsmittel 16 Flexibilität, so dass sich die Verhakungsmittel 16 leicht aus dem Bereich der Hinterschneidungen 36 entformen lassen. Die durch den Vorsprung 34 hervorgerufene Aussparung 17 wirkt entlastend. Insbesondere kann einem Abreißen des Verhakungsmittels 16 vom Stiel 14 beim Entformen des Haftverschlussteils 10 aus dem Formhohlraum 32 entgegengewirkt werden.

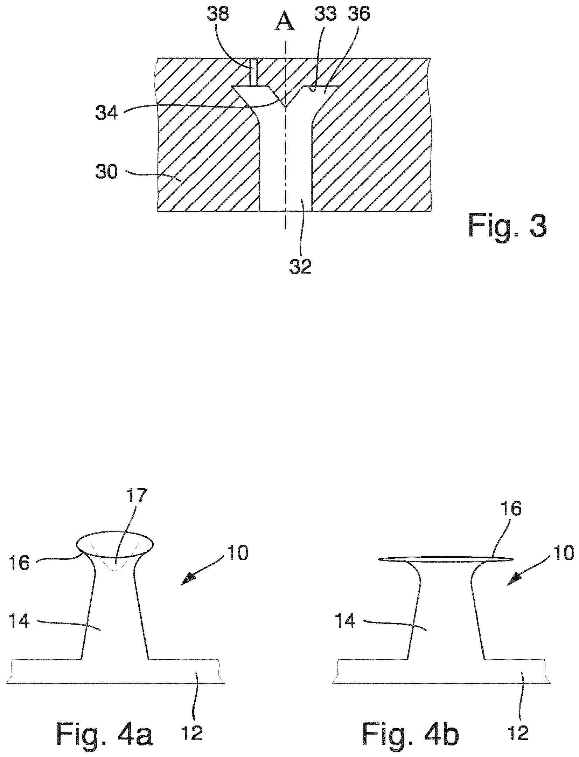

Figur 3 zeigt schematisch eine Detailansicht eines Formhohlraums 32 in einem Formhohlkörper 30. Der Formhohlraum 32 weist eine umlaufende Hinterschneidung 36 auf. Mittig am Grund 33 des Formhohlraums 32 ist ein kegelförmiger Vorsprung 34 angeordnet. Der Kegel erstreckt sich in Längsrichtung A des Formhohlraums 32. Am Grund 33 ist ein Entlüftungsloch 38 angeordnet.

Figur 4a zeigt ein mittels des in Figur 3 gezeigten Formhohlraums hergestelltes Haftverschlussteil 10. Das Haftverschlussteil 10 weist einen Stiel 14 auf, welcher sich von einem Träger 12 senkrecht erstreckt. An den Stiel 14 grenzt ein umlaufendes Verhakungsmittel 16, welches den äußeren Umfang des Stiels 14 überragt. Das Verhakungsmittel 16 weist an seiner Stirnseite eine Aussparung 17 auf.

Figur 4b zeigt das Haftverschlussteil 10 aus Figur 4a mit dem Unterschied, dass das Verhakungsmittel 16 abgekappt worden ist. Das in Figur 4a gezeigte Verhakungsmittel 10 kann über eine Abkappwalze geführt werden, wodurch der den Außenumfang des Stiels 14 überragende Teil der Verhakungsmittel 16 stärker ausgeprägt wird. Entsprechend ist das in Figur 4b gezeigte abgekappte Verhakungsmittel 16 gegenüber dem in Figur 4a gezeigten Verhakungsmittel 16 in horizontaler Richtung gestreckt. Dieses Verformungsverhalten des Verhakungsmittels 16 beim Kontaktieren mit einer Abkappwalze wird durch die in Figur 4a gezeigte Aussparung 17 an der Stirnseite des Verhakungsmittels 16 begünstigt.

Die in den vorstehenden Ausführungsformen gezeigten Stielabschnitte der Formhohlkörper weisen eine runde Oberfläche mit einem kreisförmigen Querschnitt auf. Alternativ können die Stielabschnitte der Formhohlkörper auch eckig, das heißt mit einem eckigen Querschnitt versehen sein. Drei-, vier-, fünf-, sechs- und mehreckige Querschnitte sind möglich.

Darüber hinaus kann die Form der Stielabschnitte der Formhohlkörper im Wesentlichen gerade oder konisch ausgebildet sein. In der Regel weisen die Stielabschnitte der Formhohlkörper Entformungsschrägen auf.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 10: Haftverschlussteil
- 12: Träger
- 14: Stiel
- 16: Verhakungsmittel
- 17: Aussparung

- 20: Druckwalze
- 22: Spalt

- 30: Formhohlkörper
- 32: Formhohlraum
- 33: Grund
- 34: Vorsprung
- 36: Hinterschneidung
- 38: Entlüftungsloch

- 40: Trägerwalze

- 50: Düse

- 60: Umlenkrolle

- A: Längsrichtung

## Patentansprüche

1. Verfahren zur Herstellung eines Haftverschlussteils, welches einen Träger, sich senkrecht vom Träger erstreckende Stiele, und Verhakungsmittel an den dem Träger gegenüberliegenden Bereichen der Stiele, umfasst, die Schritte umfassend:
Extrudieren eines thermoplastischen Kunststoffs in einen Spalt zwischen einer Druckwalze und einem Formhohlkörper,
Pressen eines Teils des Kunststoffs in Formhohlräume des Formhohlkörpers mittels der Druckwalze,
teilweises Verfestigen des thermoplastischen Kunststoffs in den Formhohlräumen, Lösen der Stiele gemeinsam mit den Verhakungsmitteln aus den Formhohlräumen, wobei der Formhohlkörper vollständig aus gesintertem Material gebildet ist,
**dadurch gekennzeichnet, dass**
der Formhohlkörper am Grund der Formhohlräume jeweils mindestens einen Vorsprung, der sich in Bezug auf den jeweiligen Formhohlraum in Längsrichtung erstreckt und mindestens eine Hinterschneidung aufweist.

2. Verfahren gemäß Anspruch 1, **dadurch gekennzeichnet, dass** der Formhohlkörper am Grund der Formhohlräume jeweils mindestens ein Entlüftungsloch aufweist.

3. Verfahren gemäß Anspruch 1 oder 2, **dadurch gekennzeichnet, dass** der Formhohlkörper am Grund der Formhohlräume porös ausgestaltet ist.

4. Verfahren gemäß einem der vorhergehenden Ansprüche, **dadurch gekennzeichnet, dass** der Vorsprung jeweils mittig am Grund der Formhohlräume angeordnet ist.

5. Verfahren gemäß einem der vorhergehenden Ansprüche, **dadurch gekennzeichnet, dass** am Grund der Formhohlräume jeweils mindestens zwei Vorsprünge angeordnet sind.

6. Verfahren gemäß einem der vorhergehenden Ansprüche, **dadurch gekennzeichnet, dass** der Vorsprung in Bezug auf die Ebene des Grundes der Formhohlräume eine längliche Form aufweist.

7. Verfahren gemäß Anspruch 6 rückbezogen auf Anspruch 5, **dadurch gekennzeichnet, dass** die länglichen Vorsprünge parallel zueinander verlaufen oder sich kreuzen.

8. Verfahren gemäß einem der Ansprüche 1 bis 5, **dadurch gekennzeichnet, dass** der Vorsprung die Form eines Kegels, einer Halbkugel, oder einer Pyramide aufweist.

9. Verfahren gemäß einem der vorhergehenden Ansprüche, **dadurch gekennzeichnet, dass** sich die Hinterschneidungen nur in eine Richtung im Wesentlichen senkrecht zur Längsrichtung der Formhohlräume erstrecken.

10. Verfahren gemäß einem der Ansprüche1 bis 8, **dadurch gekennzeichnet, dass** sich die Hinterschneidungen in mindestens zwei Richtungen im Wesentlichen senkrecht zur Längsrichtung der Formhohlräume erstrecken.

11. Verfahren gemäß einem der Ansprüche1 bis 8, **dadurch gekennzeichnet, dass** sich die Hinterschneidungen umlaufend im Wesentlichen senkrecht zur Längsrichtung der Formhohlräume erstrecken.

12. Verfahren zur Herstellung eines Formhohlkörpers zur Verwendung in einem Verfahren gemäß einem der vorstehenden Ansprüche,
wobei ein Formhohlkörper vollständig durch Sintern erzeugt wird,
**dadurch gekennzeichnet, dass**
in dem Formhohlkörper Formhohlräume erzeugt werden, die jeweils einen Grund aufweisen an welchem ein Materialvorsprung angeordnet ist, welcher sich in Längsrichtung der Formhohlräume erstreckt und wobei im Bereich des Grunds mindestens eine Hinterschneidung, welche sich im Wesentlichen senkrecht zur Längsrichtung eines Formhohlraums erstreckt, angeordnet ist.

13. Verfahren gemäß Anspruch 12, **dadurch gekennzeichnet, dass** ein Sintermaterial Metallpulver umfasst.
